# DEMANDE DE BREVET EUROPEEN

(11) **EP 3 491 979 A1**
(43) Date de publication de la demande: **05.06.2019**
(21) Numéro de dépôt: 17204370.5
(22) Date de dépôt: 29.11.2017
(51) Int. Cl.: A47J 36/20, A47J 36/16, A47J 36/18

(54) **RÉCIPIENT DE CUISSON, NOTAMMENT DE PATES**

(71) Demandeur: LAGOSTINA S.p.A., 28887 Omegna (VB) (IT)
(72) Inventeur: MILANESI, Fausto, 28831 BAVENO (VB) (IT); MUSCAS, Euclide, 28021 BORGOMANERO (IT); CAVICCHIOLO, Manuel, 28887 OMEGNA (IT)
(74) Mandataire: Bourrières, Patrice

(57) **Abrégé**

L'invention concerne un récipient de cuisson (1) comportant un récipient interne (10) pour contenir et égoutter des aliments à cuire, notamment des pâtes, et un récipient externe (2) destiné à recevoir le récipient interne (10) pour former un espace circonférentiel entre eux, le récipient interne (10) étant en métal et présentant une paroi latérale (11) et une paroi de fond (12) raccordées entre elles par une paroi courbe (13).

Conformément à l'invention, le récipient interne (10) comporte au moins une fente traversante (20a, ..., 20p) qui s'étend de manière continue sur la paroi latérale (11) et sur la paroi de fond (12), en passant par la paroi courbe (13).

## Description

La présente invention concerne un récipient de cuisson comportant un récipient interne muni d'ouvertures traversantes pour contenir et égoutter des aliments à cuire, notamment des pâtes, et un récipient externe destiné à recevoir le récipient interne pour former un espace circonférentiel entre eux. Un tel récipient de cuisson est destiné à être posé sur une source de chauffe notamment une plaque électrique, un réchaud à gaz, une plaque à induction.

On connaît du brevet US4604989, un récipient de cuisson comportant un récipient interne pour contenir et égoutter des aliments à cuire, notamment des pâtes, et un récipient externe destiné à recevoir le récipient interne pour former un espace circonférentiel entre eux, le récipient interne étant en métal et présentant une paroi latérale et une paroi de fond raccordées entre elles par une paroi courbe

La paroi de fond et la paroi latérale comportent des perforations circulaires qui permettent d'égoutter les aliments à cuire lorsque l'utilisateur retire le récipient interne du récipient externe, le récipient externe étant destiné à récupérer l'eau. Le récipient interne comporte une partie supérieure sur laquelle sont agencées deux poignées de manière diamétralement opposée.

Cependant lorsque la cuisson est terminée et que l'utilisateur retire rapidement le récipient interne du récipient externe, le récipient interne se trouve à l'aplomb, au-dessus du récipient externe en contenant une quantité d'eau importante qui va s'évacuer vers l'extérieur par les perforations. L'eau qui s'évacue notamment par les perforations de la paroi latérale sort sensiblement radialement à la paroi latérale puis sous l'effet de la gravité tombe vers le bas. La quantité d'eau importante crée une pression hydrostatique importante sur l'eau qui s'évacue par les perforations agencées notamment en bas de la paroi latérale. Ainsi, l'eau est propulsée radialement au-delà du bord supérieur périphérique du récipient externe et retombe à l'extérieur du récipient externe pour salir le plan de travail. Cette eau qui est très chaude, peut également atteindre l'utilisateur et ainsi le bruler.

Dans un tel récipient de cuisson, les perforations du récipient interne sont de petit diamètre et ainsi, l'effort nécessaire pour extraire le récipient interne du récipient externe lors de l'égouttage est important.

De plus, l'utilisateur peut parfaire l'égouttage en inclinant le récipient interne au-dessus du récipient externe pour agiter les aliments cuits. Cependant, lorsque le récipient interne est incliné, de l'eau peut stagner dans la paroi courbe qui n'est pas perforée.

Le but de la présente invention est de remédier aux inconvénients précités et de proposer un récipient de cuisson présentant une ergonomie optimisée pour permettre à l'utilisateur de le manipuler en toute sécurité et sans générer de salissures.

Un autre but de l'invention est de proposer un récipient de cuisson qui soit de conception simple et économique à mettre en oeuvre.

Ces buts sont atteints avec un récipient de cuisson comportant un récipient interne pour contenir et égoutter des aliments à cuire, notamment des pâtes, et un récipient externe destiné à recevoir le récipient interne pour former un espace circonférentiel entre eux, le récipient interne étant en métal et présentant une paroi latérale et une paroi de fond raccordées entre elles par une paroi courbe, caractérisé en ce que le récipient interne comporte au moins une fente traversante qui s'étend de manière continue sur la paroi latérale et sur la paroi de fond, en passant par la paroi courbe.

Lorsque l'utilisateur retire le récipient interne du récipient externe, l'eau va s'évacuer par l'au moins une fente traversante. La pression hydrostatique générée sur l'eau qui s'évacue, se répartit sur toute la longueur de la fente traversante et l'eau va sortir verticalement au niveau de la paroi de fond et au niveau de la paroi courbe et pratiquement verticalement au niveau la paroi latérale. Ainsi, l'eau qui s'évacue à travers l'au moins une fente traversante tombe entièrement dans le récipient externe, sans projections qui pourraient salir le plan de travail ou qui pourraient bruler l'utilisateur.

De manière avantageuse, le récipient externe est en métal et est destiné à être posé sur une source de chauffe notamment une plaque électrique, un réchaud à gaz, une plaque à induction.

Avantageusement, le récipient interne est destiné à être inséré dans le récipient externe sur une hauteur H et l'au moins une fente traversante s'étend sur au moins la moitié de la hauteur H du récipient interne.

Ainsi, lorsque les récipients interne et externe sont assemblés et remplis d'eau sur au moins la moitié de la hauteur H du récipient interne, lors du retrait du récipient interne, l'eau peut s'évacuer dés le début de l'égouttage, sur toute la longueur de la fente traversante située sur la paroi latérale.

Une telle disposition permet également de réduire l'effort nécessaire pour extraire le récipient interne du récipient externe lors de l'égouttage.

De manière avantageuse, l'au moins une fente traversante s'étend sur au moins les trois quarts de la hauteur H du récipient interne.

Avantageusement, la paroi de fond est circulaire et s'étend sur un rayon R et l'au moins une fente traversante s'étend sur au moins la moitié du rayon R.

Lors du retrait du récipient interne pour l'égouttage des aliments cuits, l'eau qui s'évacue par l'au moins une fente traversante agencée dans la paroi de fond le fait selon une direction uniquement verticale. Ainsi, plus l'au moins une fente traversante s'étend de manière importante dans la paroi de fond, plus la quantité d'eau évacuée à travers le fond sera importante et réduira la quantité d'eau à évacuer par l'au moins une fente traversante située sur la paroi latérale.

De manière avantageuse, l'au moins une fente traversante s'étend sur la paroi de fond de manière inclinée par rapport au rayon R.

De préférence, l'au moins une fente traversante s'étend dans un plan vertical.

Une telle disposition permet de favoriser un écoulement vertical de l'eau évacuée par l'au moins une fente traversante lors de l'égouttage des aliments cuits, notamment au niveau de la paroi latérale et de la paroi courbe.

De manière avantageuse, l'au moins une fente traversante s'étend sur la paroi latérale de manière inclinée par rapport à une direction verticale.

Avantageusement, l'au moins une fente traversante présente une largeur de passage inférieure à 50 millimètres.

Lorsque la largeur de passage est proche de 50 millimètres, le récipient de cuisson est destiné à la préparation d'aliments de grande dimension, par exemple des pommes de terre.

De préférence, la largeur de passage de l'au moins une fente traversante est comprise entre 0,5 et 1,5 millimètres.

Cette disposition permet d'obtenir un très bon compromis entre la retenue des aliments cuits et l'évacuation de l'eau lors de l'égouttage, notamment lors de la préparation de pâtes.

Avantageusement, la largeur de passage de l'au moins une fente traversante est variable.

De préférence, le récipient interne comporte un plan de symétrie dans lequel s'étend l'au moins une fente traversante et le récipient interne comporte une partie supérieure sur laquelle est agencée au moins une poignée qui s'étend selon une direction radiale au récipient interne, ladite direction radiale étant comprise dans un plan perpendiculaire au plan de symétrie dudit récipient interne.

Lorsque l'utilisateur incline le récipient interne en le tenant par la poignée au-dessus du récipient externe pour parfaire l'égouttage, le point le plus bas de la paroi courbe est situé au niveau de l'au moins une fente traversante. Ainsi, toute l'eau peut être évacuée du récipient interne.

De manière avantageuse, deux poignées sont agencées de manière symétrique sur la partie supérieure, de part et d'autre du plan de symétrie dudit récipient interne.

La manipulation d'un récipient interne de grande dimension est facilitée avec la mise en oeuvre de deux poignées. Lorsque l'utilisateur incline le récipient interne en le tenant par les deux poignées au-dessus du récipient externe pour parfaire l'égouttage, le point le plus bas de la paroi courbe est situé au niveau de l'au moins une fente traversante. Ainsi, toute l'eau peut être évacuée du récipient interne.

Avantageusement, le récipient interne est cylindrique et il comprend un ensemble de fentes traversantes réparties régulièrement sur une périphérie dudit récipient interne.

Une telle disposition permet notamment de réduire l'effort nécessaire pour extraire le récipient interne du récipient externe lors de l'égouttage.

Avantageusement, le récipient interne comporte une collerette périphérique qui s'étend vers l'extérieur et qui est destinée à coopérer avec un bord supérieur du récipient externe.

De préférence, l'au moins une fente traversante est réalisée par une opération de découpe laser, une fois le récipient interne mis en forme.

Ainsi, on garantit une parfaite géométrie de l'au moins une fente traversante.

L'invention sera mieux comprise à l'étude du mode de réalisation pris à titre nullement limitatif et illustré dans les figures annexées dans lesquelles:
- La figure 1 est une vue en perspective d'un récipient de cuisson selon un mode particulier de réalisation de l'invention.
- La figure 2 est une vue en perspective du récipient interne du récipient de cuisson de la figure 1.
- La figure 3 illustre une vue en coupe selon la ligne III-III du récipient de cuisson de la figure 1.
- La figure 4 illustre une vue en coupe selon la ligne III-III du récipient de cuisson de la figure 1, le récipient interne étant sorti au-dessus du récipient externe
- La figure 5 illustre une vue du récipient de cuisson de la figure 1, le récipient interne étant sorti de manière inclinée au-dessus du récipient externe
- La figure 6 illustre une vue en coupe selon la ligne VI-VI du récipient de cuisson de la figure 5.

On notera que, dans ce document, les termes «horizontal», «vertical», «inférieur», «supérieur», «longitudinal», «transversal», «haut», «bas», employés pour décrire le récipient de cuisson, font référence à ce récipient de cuisson en situation d'usage, lorsqu'il est posé sur une source de chauffe ou sur un plan de travail horizontal.

Comme on peut le voir aux figures de 1 à 4, un récipient de cuisson 1 comporte un récipient interne 10 pour contenir et égoutter des aliments à cuire, notamment des pâtes, et un récipient externe 2 destiné à recevoir le récipient interne 10. Le récipient externe 2 présente une forme cylindrique et comporte une paroi latérale 3 et une paroi de fond 4 plane. La paroi latérale 3 s'étend vers le haut à partir de la paroi de fond 4 jusqu'à un bord supérieur 5. Le récipient externe 2 comprend deux poignées 6, 7 agencées de manière diamétralement opposée sur la paroi latérale 3. Le récipient externe 2 est réalisé en un matériau métallique, notamment de l'acier inoxydable. La paroi de fond 4 plane du récipient externe 2 est destinée à être posée sur une source de chauffe indépendante du récipient de cuisson.

Le récipient interne 10 présente une forme sensiblement cylindrique d'axe A. Le récipient interne 10 comporte une paroi de fond 12 plane, une paroi latérale 11 et une paroi courbe 13 qui relie la paroi de fond 12 à la paroi latérale 11. Le récipient interne 10 comprend une partie supérieure 14 qui comporte une collerette 15 périphérique qui s'étend vers l'extérieur et qui est destinée à coopérer avec le bord supérieur 5 du récipient externe 2. La partie supérieure 14 du récipient interne 10 comporte deux poignées 16, 17 agencées de manière diamétralement opposée.

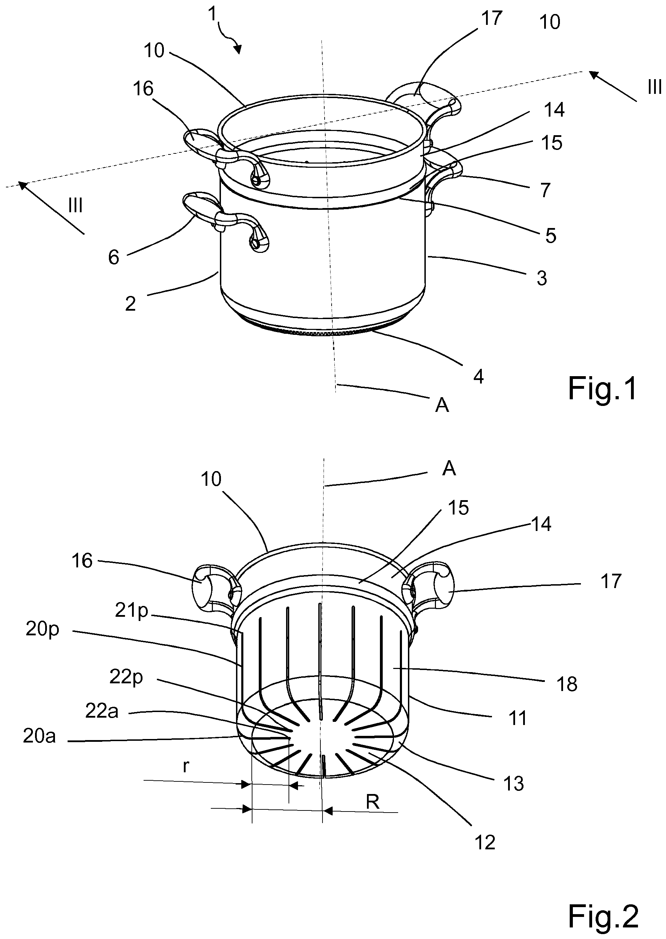

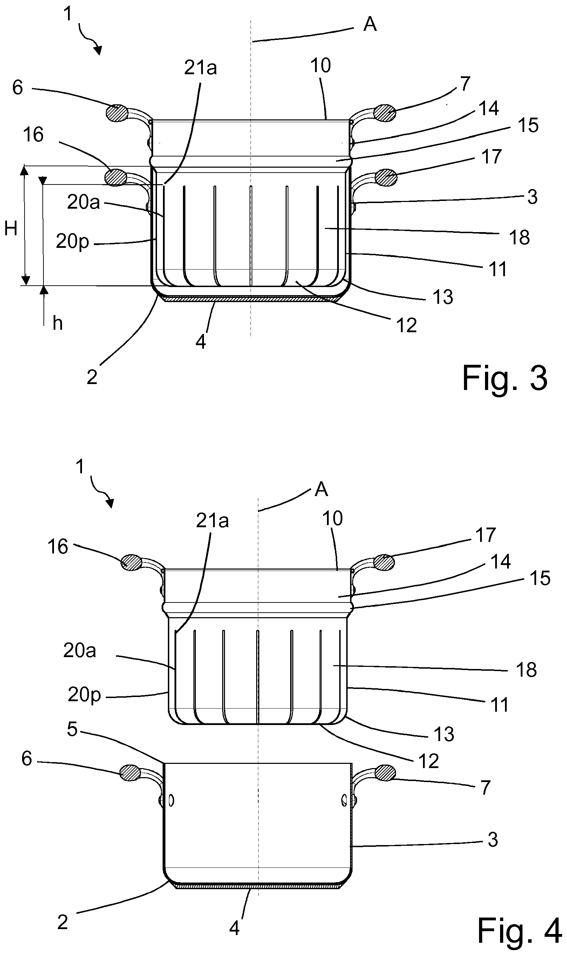

Le récipient interne 10 comporte une partie inférieure 18 qui présente une forme cylindrique dont le diamètre est légèrement inférieur au diamètre du récipient externe 2. La partie inférieure 18 est destinée à être insérée dans le récipient externe 2 jusqu'à ce que la collerette 15 repose sur le bord supérieur 5 pour former le récipient de cuisson 1 dans une position assemblée. Dans cette position assemblée, le récipient interne 10 est suspendu dans le récipient externe 2 (Fig.1 et 3), la paroi latérale 3 du récipient externe 2 et la paroi latérale 11 du récipient interne 10 définissent entre elles un espace circonférentiel et la paroi de fond 12 du récipient interne 10 est espacée de la paroi de fond 4 du récipient externe 2. Dans la position assemblée, la partie inférieure 18 du récipient interne 10 est insérée dans le récipient externe 2 sur une hauteur H qui s'étend depuis la paroi de fond 12 jusqu'à la collerette 15 (Fig.3).

La partie inférieure 18 du récipient interne 10 comporte un ensemble de 16 fentes traversantes 20a, ..., 20p identiques qui sont réparties régulièrement sur la périphérie de la partie inférieure 18. Chaque fente traversante 20a, ..., 20p s'étend de manière continue sur la paroi latérale 11, sur la paroi courbe 13 et sur la paroi de fond 12. Chaque fente traversante 20a, ..., 20p s'étend dans un plan vertical passant par l'axe A. Chaque fente traversante 20a, ..., 20p s'étend de manière rectiligne sur la paroi latérale 11 et sur la paroi de fond 12. Chaque fente traversante 20a, ..., 20p s'étend depuis la paroi de fond 12 jusqu'à une première extrémité 21 a, ..., 21p de la fente traversante 20a, ..., 20p sur une hauteur h (Fig.2 et 3). Le rapport entre la hauteur h et la hauteur H est égal à 0,87.

Conformément à la figure 2, la paroi de fond 12 du récipient interne 10 est circulaire et s'étend selon un rayon R. Chaque fente traversante 20a, ..., 20p s'étend sur la paroi de fond 12 sur une longueur r jusqu'à une deuxième extrémité 22a, ..., 22p de la fente traversante 20a, ..., 20p. Le rapport entre la longueur r et le rayon R est égal à 0,55.

Chaque fente traversante 20a, ..., 20p présente une largeur de passage comprise entre 0,5 et 1,5 millimètres. Une telle largeur est adaptée à la préparation d'aliments de petite dimension, par exemple des pâtes.

On pourrait imaginer un récipient interne 10 dont chaque fente traversante 20a, ..., 20p présente une largeur de passage inférieure à 50 millimètres, par exemple 40 millimètres. Une telle largeur est adaptée à la préparation d'aliments de grande dimension, par exemple des pommes de terre.

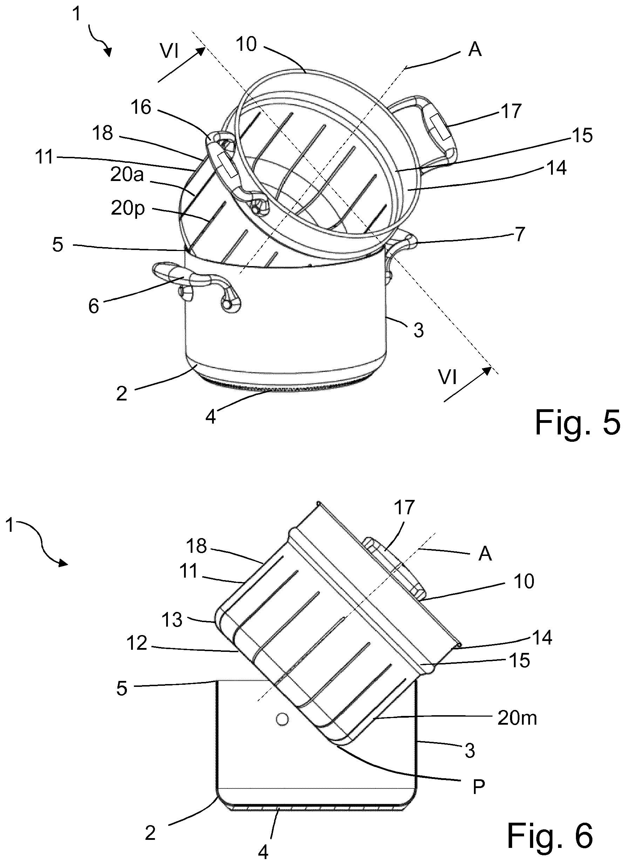

Lorsque l'utilisateur incline le récipient interne 10 en le tenant par les poignées 16, 17 au-dessus du récipient externe 2 pour parfaire l'égouttage, le récipient interne 10 est agencé de manière inclinée au-dessus du récipient externe 2 tel que visible aux figures 5 et 6. Le récipient interne 10 comporte un plan de symétrie vertical dans lequel s'étend une fente traversante 20m (Fig.6). Dans cette position, la fente traversante 20m passe par un point P le plus bas de la paroi courbe 13. Ainsi, toute l'eau peut être évacuée du récipient interne 10.

Dans une variante de réalisation non représentée, l'au moins une fente traversante présente une largeur variable, par exemple plus large sous la collerette du récipient interne et moins large au fur et à mesure que la fente traversante s'approche de la paroi de fond.

En fonctionnement, l'utilisateur insère le récipient interne 10 dans le récipient externe 2 pour former le récipient de cuisson 1 dans lequel il introduit les aliments à cuire ainsi que de l'eau. Il positionne le récipient de cuisson 1 sur une source de chauffe pour faire cuire les aliments. Une fois la cuisson terminée, il saisit les poignées 16, 17 du récipient interne 10 et extrait ce dernier au-dessus du récipient externe 2 pour égoutter les aliments cuits. L'eau contenue dans le récipient interne 10 va s'évacuer par les fentes traversantes 20a, ..., 20p. La pression hydrostatique générée sur l'eau qui s'évacue se répartit sur toute la longueur des fentes traversantes 20a, ..., 20p et l'eau va sortir verticalement au niveau de la paroi de fond 12 et au niveau de la paroi courbe 13 et pratiquement verticalement au niveau la paroi latérale 11. Ainsi, l'eau qui s'évacue des fentes traversantes 20a, ..., 20p tombe entièrement dans le récipient externe 2.

Pour parfaire l'égouttage, l'utilisateur incline le récipient interne 10 en le tenant par les poignées 16, 17 au-dessus du récipient externe 2. Le point P le plus bas de la paroi courbe 13 est situé au niveau de la fente traversante 20m à travers laquelle toute l'eau s'évacue du récipient interne.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Dans une variante de réalisation non représentée, la ou les poignées peuvent être des poignées amovibles.

## Revendications

1. Récipient de cuisson (1) comportant un récipient interne (10) pour contenir et égoutter des aliments à cuire, notamment des pâtes, et un récipient externe (2) destiné à recevoir le récipient interne (10) pour former un espace circonférentiel entre eux, le récipient interne (10) étant en métal et présentant une paroi latérale (11) et une paroi de fond (12) raccordées entre elles par une paroi courbe (13), **caractérisé en ce que** le récipient interne (10) comporte au moins une fente traversante (20a, ..., 20p) qui s'étend de manière continue sur la paroi latérale (11) et sur la paroi de fond (12), en passant par la paroi courbe (13).

2. Récipient de cuisson (1) selon la revendication 1, **caractérisé en ce que** le récipient interne (10) est destiné à être inséré dans le récipient externe (2) sur une hauteur H et **en ce que** l'au moins une fente traversante (20a, ..., 20p) s'étend sur au moins la moitié de la hauteur H du récipient interne (10).

3. Récipient de cuisson (1) selon la revendication 2, **caractérisé en ce que** l'au moins une fente traversante (20a, ..., 20p) s'étend sur au moins les trois quarts de la hauteur H du récipient interne (10).

4. Récipient de cuisson (1) selon l'une quelconque des revendications 1 à 3, **caractérisé en ce que** la paroi de fond (12) est circulaire et s'étend sur un rayon R et **en ce que** l'au moins une fente traversante (20a, ..., 20p) s'étend sur au moins la moitié du rayon R.

5. Récipient de cuisson (1) selon la revendication 4, **caractérisé en ce que** l'au moins une fente traversante s'étend sur la paroi de fond (12) de manière inclinée par rapport au rayon R.

6. Récipient de cuisson (1) selon l'une quelconque des revendications 1 à 4, **caractérisé en ce que** l'au moins une fente traversante (20a, ..., 20p) s'étend dans un plan vertical.

7. Récipient de cuisson (1) selon l'une quelconque des revendications 1 à 5, **caractérisé en ce que** l'au moins une fente traversante s'étend sur la paroi latérale (11) de manière inclinée par rapport à une direction verticale.

8. Récipient de cuisson (1) selon l'une quelconque des revendications 1 à 7, **caractérisé en ce que** l'au moins une fente traversante (20a, ..., 20p) présente une largeur de passage inférieure à 50 millimètres.

9. Récipient de cuisson (1) selon la revendication 8, **caractérisé en ce que** la largeur de passage de l'au moins une fente traversante (20a, ..., 20p) est comprise entre 0,5 et 1,5 millimètres.

10. Récipient de cuisson (1) selon l'une quelconque des revendications 8 à 9, **caractérisé en ce que** la largeur de passage de l'au moins une fente traversante est variable.

11. Récipient de cuisson (1) selon la revendication 6, **caractérisé en ce que** le récipient interne (10) comporte un plan de symétrie dans lequel s'étend l'au moins une fente traversante (20m) et **en ce que** le récipient interne (10) comporte une partie supérieure (14) sur laquelle est agencée au moins une poignée (16, 17) qui s'étend selon une direction radiale au récipient interne (10), ladite direction radiale étant comprise dans un plan perpendiculaire au plan de symétrie dudit récipient interne (10).

12. Récipient de cuisson (1) selon la revendication 11, **caractérisé en ce que** deux poignées (16, 17) sont agencées de manière symétrique sur la partie supérieure (14), de part et d'autre du plan de symétrie dudit récipient interne (10).

13. Récipient de cuisson (1) selon l'une quelconque des revendications 1 à 12, **caractérisé en ce que** le récipient interne (10) est cylindrique et **en ce qu'**il comprend un ensemble de fentes traversantes (20a, ..., 20p) réparties régulièrement sur une périphérie dudit récipient interne (10).

14. Récipient de cuisson (1) selon l'une quelconque des revendications 1 à 13, **caractérisé en ce que** le récipient interne (10) comporte une collerette (15) périphérique qui s'étend vers l'extérieur et qui est destinée à coopérer avec un bord supérieur (5) du récipient externe (2).
